Europäisches Patentamt

European Patent Office

Office européen des brevets

(11) Publication number: **0 092 203**
**B1**

# (12) EUROPEAN PATENT SPECIFICATION

(45) Date of publication of patent specification: **30.08.89**

(21) Application number: **83103678.5**

(22) Date of filing: **15.04.83**

(51) Int. Cl.⁴: **H 01 K 1/34**

(54) Tungsten-halogen incandescent lamp.

(30) Priority: **19.04.82 US 369714**

(43) Date of publication of application:
**26.10.83 Bulletin 83/43**

(45) Publication of the grant of the patent:
**30.08.89 Bulletin 89/35**

(84) Designated Contracting States:
**BE DE FR GB NL**

(56) References cited:
**DE-B-1 278 001**
**GB-A- 834 087**

(73) Proprietor: **GTE Products Corporation**
**100 West 10th Street**
**Wilmington, DE 19801 (US)**

(72) Inventor: **Gates, Paul E.**
**215 Centre Street**
**Danvers, Mass. 01923 (US)**

(74) Representative: **Lemke, Jörg-Michael, Dipl.-Ing.**
**Wolframstrasse 9**
**D-8900 Augsburg (DE)**

Courier Press, Leamington Spa, England.

## Description

This invention relates to a tungsten-halogen incandescent lamp comprising an inner, light transmitting, hermetically sealed, hard glass capsule of relatively small volume and having a longitudinal axis; an outer, light transmitting, hermetically sealed, soft glass envelope of relatively large volume and having a longitudinal axis coincident with that one of said hard glass capsule; a mount structure; a pair of lead-in wires comprising first end portions supported by the mount structure, and second end portions forming a hermetic seal with a press in said hard glass capsule and extending internally thereof to support a tungsten filament, and intermediate portions connecting said first and second end portions, said intermediate portions having first ends engaged by said press.

Tungsten-halogen lamps employing a halogen regenerative cycle operate with virtually 100% lumen maintenance over their service life because the halogen presence keeps evaporated tungsten from depositing on the bulb wall and blackening the same. Originally, the light emitting capsules, which are quite small compared with a conventional incandescent envelope, were made from fused silica or quartz. Subsequent generations have employed various hard glasses, such as borosilicate and aluminosilicate. For the most part, tungsten-halogen lamps have been used in special purpose applications because of their relatively high cost. Generally, the lamp capsule exists, and is usable, by itself; occasionally, however, they have been contained in an outer envelope. Halogen headlamps for automobiles are an example of the latter.

A tungsten-halogen lamp as mentioned above is shown in DE-B-1 278 001 and illustrates a two part lead-in wire having the second part inserted in metallic sleeves in order to support the tungsten-halogen capsule by means of a mount which is made up of bent metallic sheet material welded to the base shell. The sleeves are apparently destined not only to reinforce the lower ends of the second parts but also to ensure a better supporting connection between the mount and said second parts. Connection between sleeves and parts is also provided by welding, at least one of the sleeves being electrically isolated from the mount.

During shipping, the heavy capsule could cause the lead-in wires to bend allowing the capsule to move over toward the bulb wall. Under certain conditions this could cause the outer envelope to break.

The object of the invention is to provide for a simpler and more reliable construction ensuring a more rigid mounting for the light emitting capsule allowing greater ease of shipment, at the same time enhancing the mounting structure for sealing the light emitting capsule within the outer envelope.

This object is achieved in accordance with the characterizing clause of claim 1. Hence, the invention is characterized in that the mount structure is made of soft glass and comprises a re-entrant stem having a second press at one end thereof and a sealing area at the opposite end thereof, said first end portions forming a hermetic seal with said second press, said intermediate portions having second ends engaged by said second press and having a cross-section diameter from about 3 to about 5 times the cross-section diameter of said first and second end portions to provide greater structural rigidity than the latter.

The mounting structure of the present invention allows for ease of sealing the light emitting capsule within the outer envelope by means of the re-entrant stem which has a sealing area for flame sealing the re-entrant stem to the outer envelope.

This construction provides a rigid mounting for the light emitting capsule allowing greater ease of shipment. Further, the use of the soft glass stem allows the use of a soft glass outer envelope, substantially reducing the cost, and, for the first time, making it practical to employ the very efficient halogen regenerative cycle in lamps designed for home use as a replacement for the standard incandescent lamp.

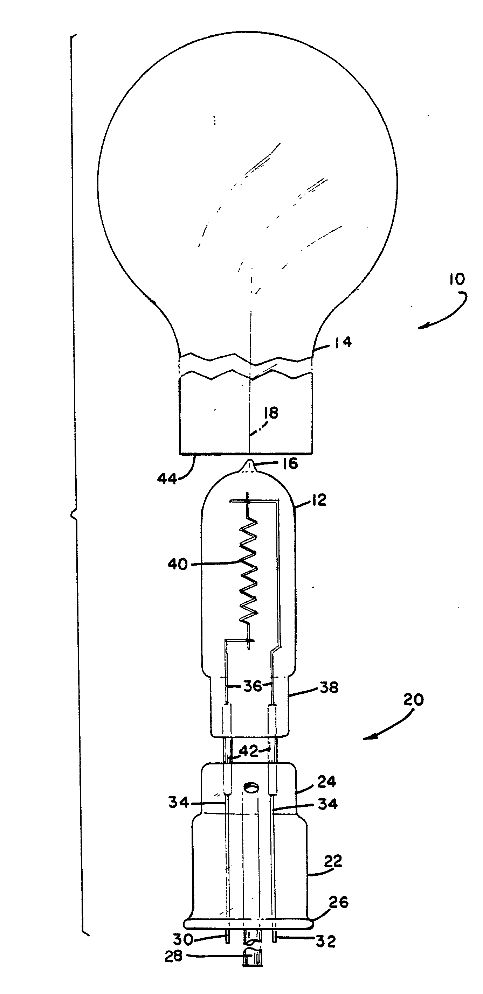

The single figure is an exploded view of an embodiment of the invention.

There is shown a tungsten-halogen incandescent lamp 10 having an inner, light transmitting, hermetically sealed, hard glass capsule 12. By hard glass is meant a material having a linear coefficient of thermal expansion of from about 58 to 32 X $10^{-7}$ °C$^{-1}$. Such glasses have a softening temperature of from about 750°C to about 950°C and a strain point of about 515°C. Exemplary of such materials are the borosilicate and aluminosilicate glasses.

The capsule 12 is enclosed within a soft glass outer envelope 14. By soft glass is meant a material having a linear coefficient of thermal expansion of about 92 X $10^{-7}$ °C$^{-1}$. Such glasses have a softening temperature of about 695°C and a strain point about 485°C and are exemplified by the soda-lime glasses.

The capsule 12 and outer envelope 14 have longitudinal axes 16 and 18 respectively and, when assembled as a unit, these axes are aligned.

A mount structure 20 of soft glass, preferably the same material as envelope 14, comprises a re-entrant stem 22 having a first press 24 at one end thereof and a sealing area 26 at the opposite end thereof. An exhaust tubulation 28 can also be provided for evacuating and/or gas filling the outer envelope.

Two lead-in wires 30 and 32 are comprised of first end portions 34 which are hermetically sealed in the first press 24. To form a hermetic seal it is necessary that the first end portions 34 be selected from materials having a thermal expansion coefficient substantially matching that of the glass. In the case of soft glass, preferred materials are platinum and Dumet. The latter material comprises a nickel-iron core which is copper plated and can be borated to improve wetting action. It is a standard sealing component that has been used for many years.

The second end portions 36 are hermetically sealed in a second press 38 formed in capsule 12. The material for the second end portions 36 are selected from those materials which have substantially the same coefficient of expansion as the hard glass so that a stable, hermetic seal can be formed. Such materials include, for example, molybdenum and alloys thereof, such as molybdenum containing 3% tantalum.

The second end portions 36 extend internally of capsule 12 and mount a tungsten filament 40 (preferably in the form of a coiled coil) between the ends thereof.

Intermediate portions 42 connect the first and second end portions, as by being butt welded thereto. The intermediate portions 42 have ends which are engaged by the first press 24 and the second press 38, as by being sealed therein; however, it is not necessary that the latter seal be hermetic.

The intermediate portions 42 are formed to provide structural rigidity for the capsule-mount assembly. In the embodiment shown, the structural rigidity is supplied by forming intermediate portions 42 from material having a diameter that is from about 3 to about 5 times the diameter of the first end and second end portions. In a preferred embodiment the first end and second end portions can have a diameter of about between 0.254 mm (0.010 inches) and 0.4318 mm (0.017 inches), while the intermediate portions have a diameter of about 1.27 mm (0.050 inches). A preferred material is nickel plated iron or No. 52 alloy, a material comprised of 50 wgt. % Fe and 50 wgt. % Ni.

To provide the rigidity function, the length of the intermediate portions should be as short as possible.

Upon assembly of the capsule-mount unit into outer envelope 14 the sealing area 26 of re-entrant stem 22 is sealed to the neck terminus 44 of outer envelope 14. Sealing can be conventional flame melting. The outer envelope 14 can then be evacuated and/or gas filled by means of exhaust tubulation 28. The tubulation is then tipped-off, or sealed, as is conventional.

Thus, there is provided a rugged support for a tungsten-halogen capsule which allows more expeditious shipping and handling thereof. Further, the employment of a soft glass stem and soft glass outer envelope provides significant cost reductions.

## Claims

1. A tungsten-halogen incandescent lamp (10) comprising: an inner, light transmitting, hermetically sealed, hard glass capsule (12) having a longitudinal axis; an outer, light transmitting, hermetically sealed, soft glass envelope having a longitudinal axis coincident with that one of said hard glass capsule (12); a mount structure (20); a pair of lead-in wires (30, 32) comprising first end portions (34) supported by the mount structure (20), and second end portions (36) forming a hermetic seal with a press (38) in said hard glass capsule (12) and extending internally thereof to support a tungsten filament (40), and intermediate portions (42) connecting said first and second end portions (34, 36), said intermediate portions (42) having first ends engaged by said press (38), characterized in that the mount structure (20) is made of soft glass and comprises a re-entrant stem (22) having a second press (24) at one end thereof and a sealing area (26) at the opposite end thereof, said first end portions (34) forming a hermetic seal with said second press (24), said intermediate portions (42) having second ends engaged by said second press (24) and having a cross-section diameter from about 3 to about 5 times the cross-section diameter of said first and second end portions (34, 36) to provide greater structural rigidity than the latter.

2. The lamp of Claim 1 wherein said first end portions (34) are selected from materials having substantially the same coefficient of thermal expansion as said soft glass.

3. The lamp of Claim 2 wherein said second end portions (36) are selected from materials having substantially the same coefficient of thermal expansion as said hard glass.

4. The lamp of Claim 3 wherein said second end portions (36) are selected from molybdenum and alloys thereof.

5. The lamp of Claim 4 wherein said first end portions (34) comprise a nickel-iron core which is copper coated.

6. The lamp of Claim 5 wherein said hard glass is selected from aluminosilicate and borosilicate glasses having thermal expansion coefficients of about 58 to 32 X $10^{-7}$ °C$^{-1}$, and said soft glass is selected from soda-lime glasses having thermal expansion coefficients of about 92 X $10^{-7}$ °C$^{-1}$.

## Patentansprüche

1. Wolfram-Halogen-Glühlampe (10) mit einer inneren, lichtdurchlässigen, hermetisch abgeschlossenen Hartglaskapsel (12), die eine Längsachse besitzt; einer äußeren, lichtdurchlässigen, hermetisch abgeschlossenen Weichglashülle, die eine Längsachse aufweist, die mit derjenigen der Hartglaskapsel (12) koinzident ist; einer Halterung (20); einem Paar von Zuführungsdrähten (30, 32) mit ersten Endbereichen (34), die von der Halterung (20) abgestützt sind, und zweiten Endbereichen (36), die mit einer Quetschung (38) in der Hartglaskapsel (12) eine hermetische Abdichtung bilden und sich im Inneren derselben erstrecken und einen Wolfram-Glühfaden (40) abstützen, sowie mit Mittelbereichen (42), die die ersten und zweiten Endbereiche (34, 36) verbinden, wobei die Mittelbereiche (42) erste Enden aufweisen, die von der Quetschung (38) umschlossen sind, dadurch gekennzeichnet, daß die Halterung (20) aus Weichglas hergestellt ist und einen einspringenden Schaft (22) mit einer zweiten Quetschung (24) an seinem einen Ende und einem Abdichtungsbereich (26) an seinem gegenüberliegenden Ende aufweist, wobei die ersten Endbereiche (34) eine hermetische Abdichtung mit der zweiten Quetschung (24) bilden und die Mittelbereiche (42) zweite Enden aufweisen, die von der zweiten Quetschung (24) umschlossen sind und einen Querschnittsdurchmesser besitzen, der etwa dreimal bis etwa fünfmal den Querschnittsdurchmesser der ersten und zweiten Endbereiche (34, 36) ausmacht, um eine größere strukturelle Steifigkeit als die letzteren zu gewährleisten.

2. Lampe nach Anspruch 1, bei welcher die ersten Endbereiche (34) aus Materialien ausgewählt worden sind, die im wesentlichen den gleichen Wärmeausdehnungskoeffizienten aufweisen wie Weichglas.

3. Lampe nach Anspruch 2, bei welcher die zweiten Endbereiche (36) aus Materialien ausgewählt worden sind, die im wesentlichen den gleichen Wärmeausdehnungskoeffizienten aufweisen wie Hartglas.

4. Lampe nach Anspruch 1, bei welcher die zweiten Endbereiche (36) aus Molybdän und seinen Legierungen ausgewählt worden sind.

5. Lampe nach Anspruch 4, bei welcher die ersten Endbereiche (34) einen Nickel-Eisen-Kern aufweisen, der mit Kupfer überzogen ist.

6. Lampe nach Anspruch 5, bei welcher das Hartglas aus Aluminiumsilikat- und Borosilikatgläsern ausgewählt worden ist, die einen Wärmeausdehnungskoeffizienten von etwa 58 bis 32 × $10^{-7}$ °C$^{-1}$ besitzen, und daß das Weichglas aus Soda-Kalk-Gläsern ausgewählt ist, die einen Wärmeausdehnungskoeffizienten von etwa 92 × $10^{-7}$ °C$^{-1}$ aufweisen.

**Revendications**

1. Lampe à incandescence au tungstène-halogène (10) comprenant:
    une ampoule interne (12) en verre dur, transparente pour la lumière, hermétiquement scellée, présentant un axe longitudinal;
    une ampoule externe en verre doux, transparente pour la lumière, hermétiquement scellée, présentant un axe longitudinal concidant avec celui de la dite ampoule en verre dur (12);
    une monture (20),
    deux entrées de courant (30, 32) ayant une première partie d'extrémité (34) portée par la monture (20), et une seconde partie d'extrémité (36) formant un scellement hermétique avec un pied pressé (38) dans la dite ampoule en verre dur (12) et faisant saillie à l'intérieur de celle-ci pour porter un filament au tungstène (40), et une partie intermédiaire (42) reliant les dites première et seconde parties d'extrémité (34, 36) et ayant une première extrémité au contact du dit pied pressé (38),
    caractérisée en ce que la dite monture (20) est réalisée en verre doux et comprend une tige (22) présentant à une extrémité un second pied pressé (24) et à l'autre extrémité une zone de scellement (26), les dites premières parties d'extrémité (34) formant un scellement hermétique avec le dit second pied pressé (24), les dites parties intermédiaires (42) présentant une seconde extrémité au contact du dit second pied pressé (24) et ayant un diamétre 3 à 5 fois environ supérieur à celui des dites premières et secondes parties d'extrémité (34, 36) de manière à assurer une rigidité structurelle supérieure à celle de cette dernière.

2. Lampe selon la revendication 1 caractérisée en ce que les dites premières parties d'extrémité (34) sont réalisées dans un matériau ayant substantiellement le même coefficient de dilatation thermique que le dit verre doux.

3. Lampe selon la revendication 2 caractérisée en ce que les dites secondes parties d'extrémité (36) sont réalisées dans un matériau ayant substantiellement le même coefficient de dilatation thermique que le dit verre dur.

4. Lampe selon la revendication 3 caractérisée en ce que les dites secondes parties d'extrémité (36) sont réalisées en molybdène ou en alliage au molybdène.

5. Lampe selon la revendication 4 caractérisée en ce que les dites premières parties d'extrémité (34) comporte un noyau au nickel-fer recouvert de cuivre.

6. Lampe selon la revendication 5 caractérisée en ce que le dit verre dur est choisi dans le groupe des verres à l'aluminosilicate ou au borosilcate, dont le coefficient de dilatation thermique est compris entre 58 et 32.$10^{-7}$°C$^{-1}$, et le verre doux parmi les verres à la soude dont le coefficient de dilatation thermique est de l'ordre de 92.$10^{-7}$°C$^{-1}$.